# EUROPEAN PATENT SPECIFICATION

(11) **EP 3 983 096 B1**
(45) Date of publication and mention of the grant of the patent: **06.12.2023**
(21) Application number: 20826564.5
(22) Date of filing: 17.06.2020
(51) Int. Cl.: A63B 43/00, A63B 41/02, H02J 50/00, H02J 50/12, H04W 4/80, A63B 24/00

(54) **SPORTS BALL WITH ELECTRONICS HOUSED IN SHOCK-ABSORBING CARRIER**
SPORTBALL MIT EINER IN EINEM STOSSDÄMPFENDEN TRÄGER UNTERGEBRACHTEN ELEKTRONIK
BALLON DE SPORT CONTENANT UNE ÉLECTRONIQUE LOGÉE DANS UN SUPPORT ABSORBANT LES CHOCS

(30) Priority: 17.06.2019 US 201962862232 P
(43) Date of publication of application: 20.04.2022
(73) Proprietor: DDSports, Inc., Merriam, KS 66203 (US)
(72) Inventor: IANNI, Bruce C., Mission Hills, KS 66208 (US); ROSS, Davyeon, D., Overland Park, KS 66221 (US); MAZIARZ, Michael, Wilbraham, MA 01095 (US); KAHLER, Clint, A., Spring Hill, KS 66063 (US)
(74) Representative: Appleyard Lees IP LLP
(86) International application number: PCT/US2020/038051
(87) International publication number: WO 2020/257227

(56) References cited:
- KR-B1- 101 280 236
- US-A- 5 609 411
- US-A1- 2014 200 103
- US-A1- 2016 074 714
- US-A1- 2017 021 229
- US-A1- 2018 015 333
- US-A1- 2018 161 656
- US-B2- 8 517 870

## Description

### BACKGROUND AND FIELD OF THE INVENTION

The present invention relates generally to the field of sports and sports-related equipment, and more specifically to sports equipment like basketballs, footballs, and soccer balls containing embedded electronics such as printed circuit boards, antennas, transceivers, sensors, batteries, and battery-charging electronics. US 2014/0200103 A1 relates to supporting electronics that can sense the motion of a game and can be encapsulated by a potting compound which forms an encapsulating body, sized and shaped to fit within a cavity of the game ball. US 5609411A relates to an illuminating device comprising a mounting seat body, a tube integrally coupled to the mounting seat body and an electric circuit that is inserted into the mounting seat body and integrally coupled tube.

In recent years, a number of sensor-based technologies have been developed to monitor athletes' performance in various sporting activities. As used herein, monitoring should be understood to refer broadly to tracking almost any parameter of an athlete's performance, including speed, acceleration, location of the player's body, position of the player's body, force applied to a sporting object (ball, puck, etc.), and so forth. In those cases where the behavior of the sporting object itself is being monitored using a sensor that is attached to or embedded within the sporting object, it is important for the behavior of the sporting object to be as unaffected as possible by the sensor and the structure that surrounds and protects the sensor within the ball. For example, it is known -- generally speaking -- to have a sensor within a basketball and to use the sensor to measure various parameters of the basketball (position, force applied to the basketball, acceleration, spin, trajectory, etc.) However, because the sport of basketball depends so much on dribbling (i.e., bouncing the ball), it is criticaland challenging -- to embed a sensor in the ball in a way that does not change the shape or elasticity of the basketball, create a "dead spot" on the surface of the basketball, or otherwise negatively affect the basketball's bounce characteristics during dribbling, the basketball's rebound performance after striking the rim or the backboard on a basketball goal, or the rotation and trajectory of the basketball during the flight of a shot attempt.

### SUMMARY OF THE INVENTION

The invention is set out in the appended set of claims.

### OUTLINE OF THE DISCLOSURE

The disclosure below features a sports object, e.g., a basketball, with an embedded sensor module. The sensor module includes electronic components, such as a sensor and a transmitter, configured to generate and broadcast a unique identification code associated with the sports object in which it is embedded. The unique identification code can be detected and used by an external receiver and computer system to track the location of the sports object. The sensor module is designed to insulate and protect the electronic components from shocks and vibrations associated with using the sports object in a game, without noticeably changing the sports object's normal performance characteristics.

Thus, in one aspect, the disclosure features a sports ball, which includes an inflatable bladder and a sensor module attached to the inner surface of the wall of the bladder. The sensor module extends internally into the bladder, toward the center of the ball, with the sensor module including an elastomeric boot and a sensor assembly disposed within a pocket in the elastomeric boot. The sensor assembly includes a radio transmitter, a rechargeable battery, and a wireless-resonant-charging coil configured to recharge the rechargeable battery. Typically, the radio transmitter, rechargeable battery, and wireless-resonant charging coil are all attached to a printed circuit board, which mechanically supports and electrically interconnects the components, or other supporting substrate. To minimize the effect on behavior of the ball, the wireless-resonant-charging coil is located, within the boot, at a position that is spaced a distance from the wall of the bladder (i.e., in a direction toward the center of the ball). In particular, because the wireless-resonant-charging coil is spaced from the wall of the bladder toward the center of the ball - using wireless resonant charging instead of inductive Qi-type charging as in other devices permits more spacing - the charging coil is less likely to be struck by the wall of the basketball as the basketball compresses when it is being bounced, even if the ball lands directly on the location of the sensor module.

In embodiments of a sports ball in accordance with the disclosure, the sensor assembly - in particular, the substrate - is oriented generally perpendicularly to the inner surface of the bladder. The wireless-resonant-charging coil may be oriented perpendicularly to the substrate, and located at an end of the substrate that is closer to the wall of the bladder. Suitably, the wireless-resonant-charging coil may be oriented generally parallel to the wall of the bladder in the vicinity of the point of attachment of the sensor module to the bladder, although it is envisioned that as wireless resonant charging technology advances, there will be greater freedom of design in terms of the particular orientation of the charging coil. Such advances could permit the wireless-resonant-charging coil to be arranged parallel to the substrate, e.g., in a stacked configuration.

Furthermore, the boot may conform tightly to the shape of the sensor assembly such that there is very little, if any, unoccupied space within the boot. Advantageously, the boot may include a longitudinally extending rib extending into the pocket to secure the sensor assembly within the pocket while maintaining a slight amount of free space within the boot. Advantageously, the boot is longitudinally symmetrical, or as symmetrical as possible, which makes vibration characteristics of the boot as isotropic as possible.

To enable electronic communications, the sensor assembly may have an antenna disposed on the substrate, e.g., on a side of the substrate that is opposite to the side of the substrate on which the battery is located. The antenna may be located at an end of the substrate that is opposite to the end of the substrate to which the wireless-resonant-charging coil is attached, e.g., at the end of the substrate closest to the center of the ball. Further still, the sensor assembly may comprise a chip-based, ultra-wide-band, radio-enabled device configured, for example, to transmit a unique identification code.

The sensor module may include a plug-shaped cap disposed within an end of the boot pocket that is closest to the inside wall of the bladder. The cap may include a circumferential rib located lengthwise approximately in the middle of the cap, and the boot pocket may include a circumferential groove -- formed in a wall of the pocket -- into which the circumferential rib fits to secure the cap, and therefore the sensor assembly, within the boot.

Suitably, the boot includes a flange by means of which the boot is secured to the wall of the bladder, e.g, by a self-vulcanizing process.

In another aspect, the invention features a sports ball, which includes an inflatable bladder and a sensor module attached to the inner surface of the wall of the bladder. The sensor module extends internally into the bladder, toward the center of the ball, with the sensor module including an elastomeric boot and a sensor assembly disposed within the elastomeric boot and extending beyond an open lower end of the elastomeric boot. The sensor assembly includes a radio transmitter, a rechargeable battery, and a wireless-resonant-charging coil configured to recharge the rechargeable battery. Typically, the radio transmitter, rechargeable battery, and wireless-resonant charging coil are all attached to a printed circuit board, which mechanically supports and electrically interconnects the components, or other supporting substrate. To minimize the effect on behavior of the ball, the wireless-resonant-charging coil is located, within the boot, at a position that is spaced a distance from the wall of the bladder (i.e., in a direction toward the center of the ball). In particular, because the wireless-resonant-charging coil is spaced from the wall of the bladder toward the center of the ball - using wireless resonant charging instead of inductive Qi-type charging as in other devices permits more spacing - the charging coil is less likely to be struck by the wall of the basketball as the basketball compresses when it is being bounced, even if the ball lands directly on the location of the sensor module.

### BRIEF DESCRIPTION OF THE DRAWINGS

These and other further features of the invention will become clearer from the detailed description below as well as the accompanying drawings, in which:
Figure 1 is a schematic section view of a ball with an embedded sensor module, with Figure 1A being an enlarged view of the circled portion of Figure 1
Figures 2A and 2B are three-dimensional renderings of a sensor assembly (part of the module illustrated in Figures 1 and 1A), with Figure 2A showing the sensor assembly before encapsulation of components and Figure 2B showing the sensor assembly after encapsulation of components by overmolding with plastic; and Figures 2C-2G are an edge view, side view of one side, side view of the other side, top view, and bottom view, respectively, of the sensor assembly shown in Figures 2A and 2B;
Figures 3A-3C are a perspective view, section view, and top view of sensor-housing boot (part of the module illustrated in Figures 1 and 1A);
Figure 4 is a side view of a cap used to enclose the sensor assembly shown in Figures 2A-2G within the boot shown in Figures 3A-3C; and
Figures 5A and 5B are two perspective views, from slightly different angles, illustrating a further embodiment, falling under the claimed invention.

### DETAILED DESCRIPTION OF EMBODIMENTS OF THE DISCLOSURE

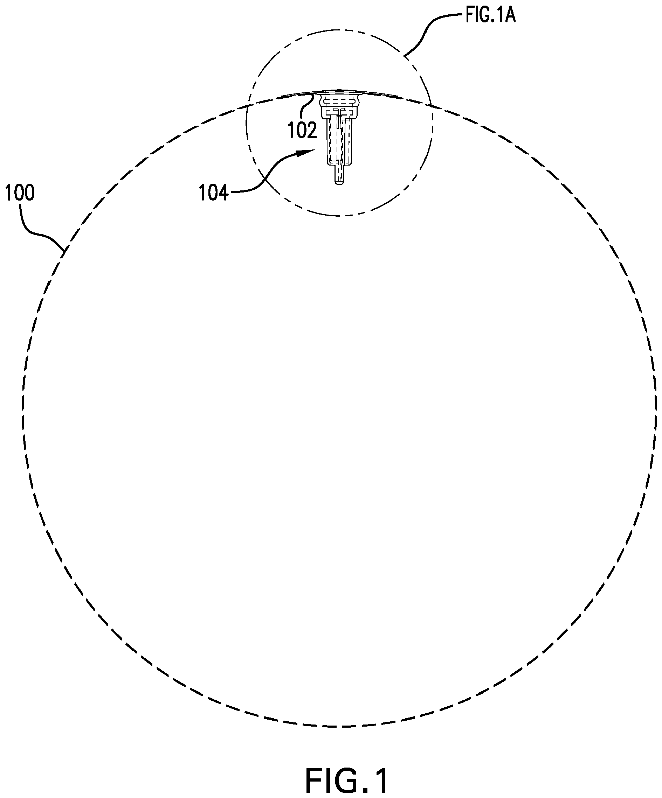

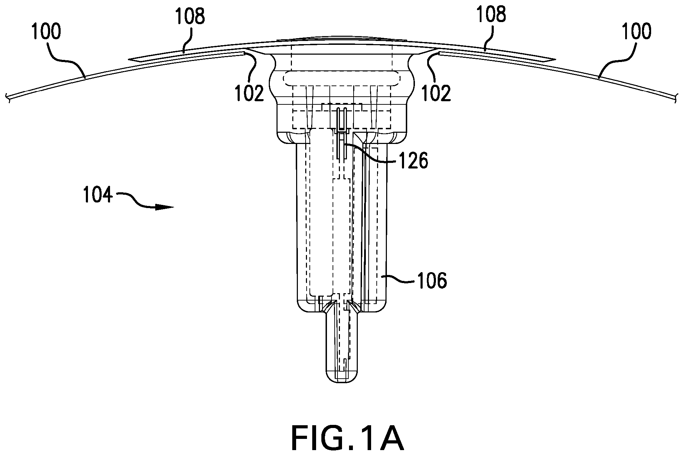

The placement of an internal sensor module 104 on an inside surface of an internal bladder 100 of a basketball is illustrated in Figures 1 and 1A. In general, the bladder 100 is fairly conventional, except that it includes a hole 102 to receive the internal sensor module 104. The sensor module 104 includes a chip-based sensor assembly (not labeled in Figures 1 and 1A but described in greater detail below), which is contained within a generally cup-shaped rubber boot 106. The boot 106 includes a circular flange 108 at its upper end (i.e., the end that will be located farthest from the center of the ball), which flange overlies and bonds to the outer surface of the bladder 100 by a self-vulcanization process.

To make a ball in accordance with the claimed invention, the bladder 100 is formed with the boot 106 attached to it. The bladder 100 is wound with threads, and a second layer of rubber is vulcanized over the threads to make a composite structure of the bladder, windings, and carcass. Then, the sensor assembly is installed into the boot 106; a cap (not labeled in Figures 1 and 1A but described in greater detail below) is installed; and then cover panels are laminated via contact cement to the composite structure now containing the sensor module. Alternatively, the sensor could be inserted after bladder winding, and then a second layer of rubber with an unvulcanized cap could be applied with vulcanizing performed as a subsequent step. This would produce a homogeneous surface of vulcanized rubber over the sensor.

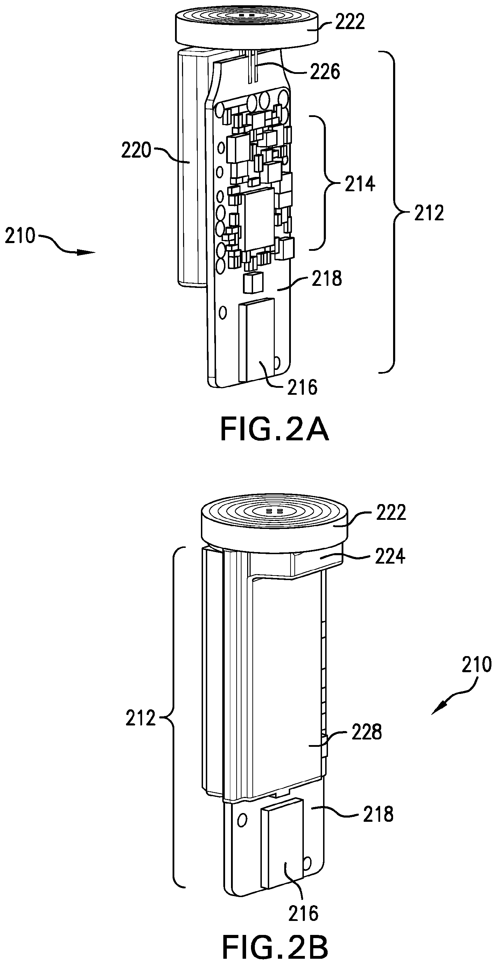

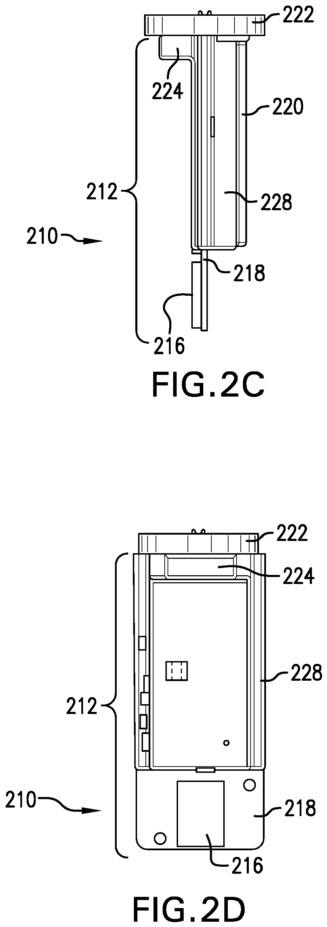

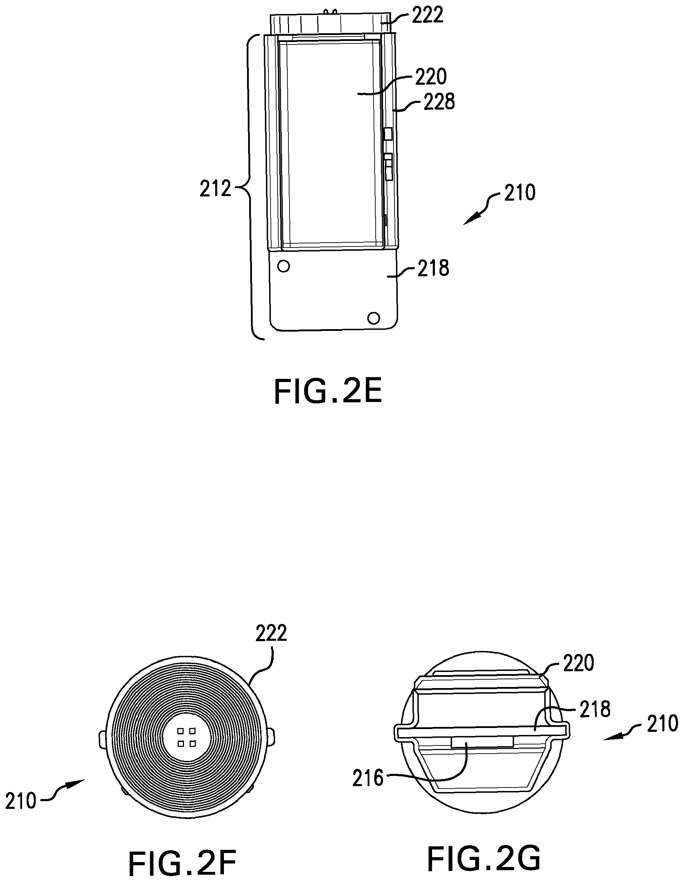

Further details of the chip-based sensor assembly 210 are shown in Figures 2A-2G. In general, the sensor 212 may comprise a chip-based, ultra-wide-band (UWB), radio-enabled tag that is able to transmit a unique identification code that is specific to the particular ball in which the sensor 212 is embedded. Thus, the sensor 212 includes various chips and electronic components 214 and a transmitting/receiving antenna 216 mounted to printed circuit board 218, which interconnects the various electronic components, or to another supporting substrate. The sensor 212 also includes a rechargeable battery 220, e.g., a 115mAh LiPo battery, mounted to the side of the printed circuit board 218 that is opposite to the side on which the antenna 216 is mounted (to avoid interference between the battery 220 and the antenna 216).

The sensor assembly 210 utilizes resonant wireless charging technology to recharge the battery 220. Therefore, the sensor assembly 210 also includes a resonant wireless charging coil 222. Resonant wireless charging is used instead of inductive Qi-type charging because the secondary, energy-receiving coil (i.e., the charging coil 222) can be located farther away from the charging source than in the case of inductive Qi-type charging. This allows the charging coil 222 to be positioned farther into the interior of the basketball than would be the case if inductive Qi-type charging were used, and positioning the charging coil 222 farther into the interior of the basketball helps to minimize or reduce the effect the coil 222 will have on the bouncing and rebound performance of the basketball.

Notably, the charging coil 222 is oriented perpendicularly to the printed circuit board 218 and is attached to the end of the printed circuit board 218 that is opposite to the end of the printed circuit board 218 on which the antenna 216 is mounted. This arrangement facilitates inserting the antenna-bearing end of the printed circuit board 218 as far into the interior of the basketball as possible, which is advantageous for localizing the exact position of the ball in space (e.g., by computer-implemented triangulation algorithms), while giving the charging coil 222 an optimal orientation for charging purposes, i.e., essentially parallel to the closest portion of the wall of the basketball (although it is envisioned that as wireless resonant charging technology advances, there will be greater freedom of design in terms of the particular orientation of the charging coil).

A charging-coil printed circuit board 224 is associated with the charging coil 222 and includes circuitry that controls operation of the charging coil 222 to charge the battery 220. The charging coil 222 and its associated printed circuit board 224 are connected to the sensor assembly 210 using a four-post printed-circuit-board connector 126 (Figure 1A) to attach the charging-coil printed circuit board 224 to the sensor printed circuit board 218, with two of the posts being soldered to each of the two printed circuit boards 218, 224 respectively, and serving as "anchors." Once the battery 220 and the charging antenna 222 and its associated printed circuit board 224 have been assembled to the sensor printed circuit board 218, all components of the sensor assembly 210 are over-coated, e.g., with a rigid, urethane-type material 228 to hold the components together and prevent them from breaking free under the high-acceleration forces experienced during dribbling, etc. (Suitably, the face of the antenna 216 is not over-coated if it is a PCB antenna, to allow free transmission of signals from the antenna 216, but is overcoated if it is a chip-based antenna.)

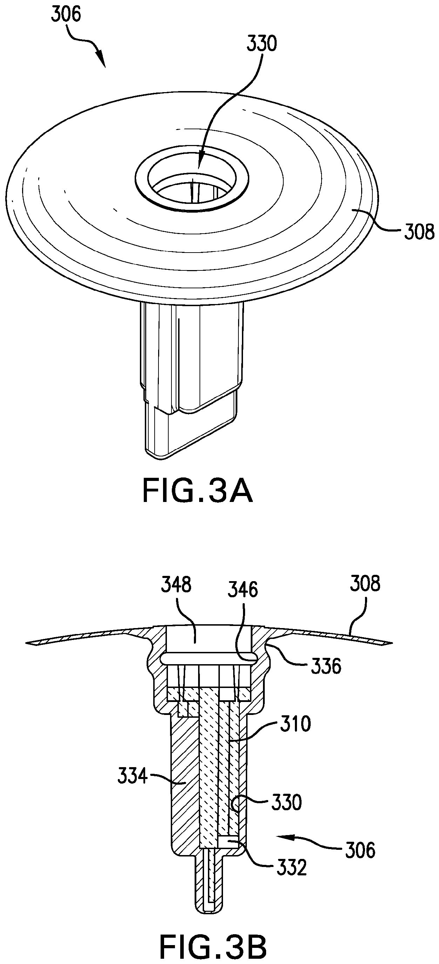

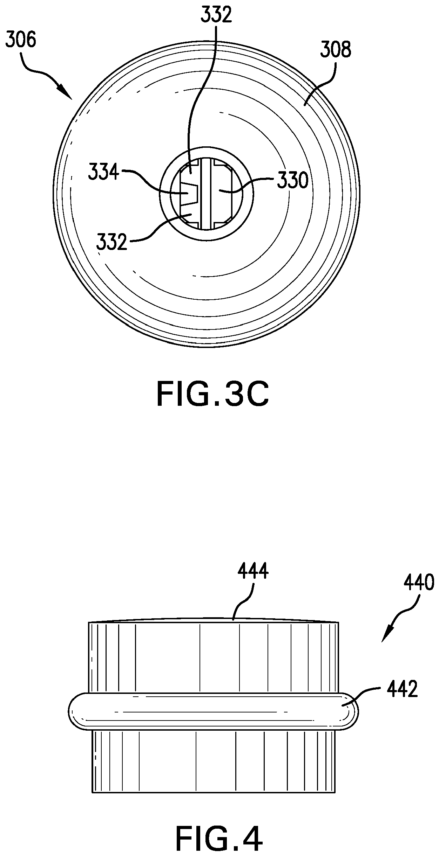

The boot 306 is illustrated in greater detail in Figures 3A-3C. As indicated above, the boot 306 is made from rubber, e.g., butyl rubber or a blend of butyl rubber and SBR (styrene-butadiene rubber), and is finished to 35 - 45 Shore A hardness. Additionally, as noted above, the boot 306 is generally cup-shaped, with an internal cavity or pocket 330 that is configured to receive the sensor assembly 310 (indicated by hatching in Figure 3B) with relatively minimal excess space surrounding it. In other words, the boot 306 tightly conforms to the sensor assembly 310. This feature is important because if there is too much excess space within the boot 306, e.g., air-space 332, then pressure build-up within the excess space when the ball is inflated can tend to force the sensor assembly 310 out of the boot 306 and ball altogether. The sensor assembly 310 is able to fit far enough into the pocket 330 for the charging coil 222 to be located at a position that is a distance from the wall of the bladder (i.e., in a direction toward the center of the ball).

On the other hand, some air space, or air conduit, is desirable, to make it easier to insert the sensor assembly 310 fully into the pocket 330 or to remove the sensor assembly 310 from the pocket 330, if necessary. If there is no air space or conduit for air to enter into or escape from the pocket, then a bubble of air trapped within the pocket 330 could prevent the sensor assembly 310 from being inserted fully into the pocket 330 (due to difficulty of compressing such a trapped bubble of air), or vacuum forces could prevent the sensor assembly 310 from being withdrawn from the pocket 330. Therefore, to provide a small amount of excess space while still keeping the sensor assembly 310 well secured within the pocket 330, as well as to strengthen the pocket 330, a rib 334 extends longitudinally along a wall of the pocket 330. The rib 334 protrudes radially far enough into the interior of the pocket 334 to bear against the side of the sensor assembly 330 that does not contain the battery, and an air conduit is formed on either side of the rib.

Advantageously, the boot is longitudinally symmetrical, or as symmetrical as possible, which makes vibration characteristics of the boot as isotropic as possible

Near the top of the boot 306, a groove 336 extends circumferentially around the exterior surface of the boot 336, just below the flange 308. The vibrational characteristics of the overall sensor module can be "tuned" to minimize the effect on performance of the basketball by adjusting the depth and radius of curvature of the groove 336.

Once the sensor assembly 310 has been fully inserted into the pocket 330 within the boot 306, the pocket 330 is closed using a plug-shaped cap 440, which is illustrated in Figure 4. The cap 440 may be made from the same material as the boot 306. The cap 440 is generally cylindrical and has a rib 442 that extends circumferentially around the surface of the cap, essentially half-way between the upper and lower ends of the cap 440, as well as a slightly rounded upper end 444. The rib 442 fits within a groove 346 that extends circumferentially around the wall of the pocket 330 near the upper, socket-shaped end 348 of the pocket 330 to secure the cap 440 within the boot 308. The upper end 444 of the cap 440 is rounded to match the curvature of the bladder 100 of the ball when it is inflated, thereby minimizing the effect on the shape and hence performance of the ball.

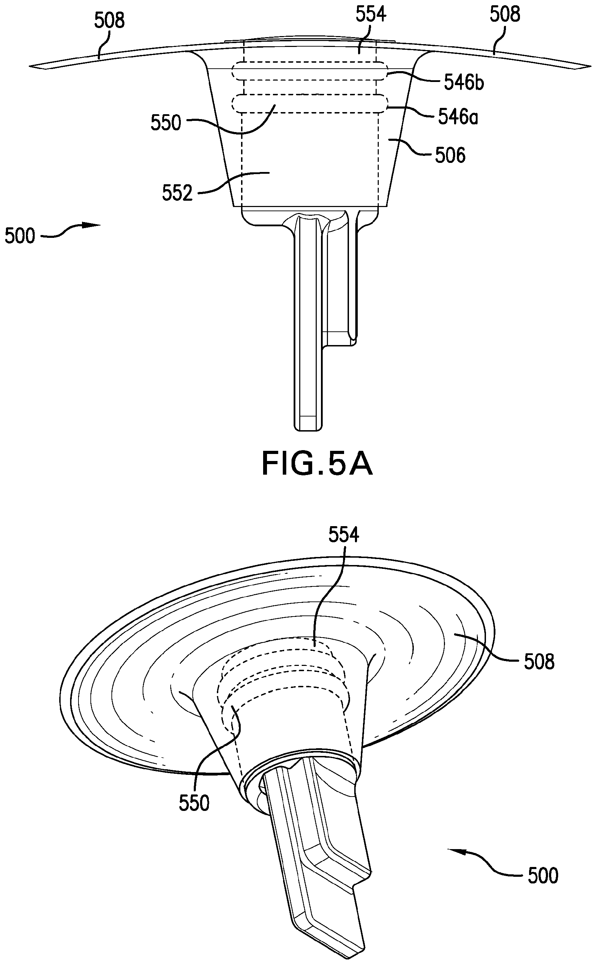

A further embodiment 500, falling under the claimed invention, of a housed/supported sensor assembly in accordance with the invention is illustrated in Figures 5A and 5B. In this embodiment, which would be installed in a ball that is fabricated in the same manner as described above with respect to Figure 1, the rubber boot 506 is formed as a truncated cone, with an open lower end (i.e., the end that is closer to the center of the ball in which the sensor is embedded). This open-ended, truncated-cone configuration helps reduce the weight of the sensor "package" so that the ball in which the sensor is embedded performs even more like a standard ball that does not have the embedded sensor.

The sensor assembly used in this embodiment - i.e., the printed circuit board, the various chips and electronic components, and the transmitting/receiving antenna, including their assembly and arrangement - are the same as or generally similar to the sensor assembly used in the embodiment described above. Like the above-described sensor assembly, the sensor assembly used in the embodiment illustrated in Figures 5A and 5B is encapsulated within a polyurethane "shell" formed by overmolding with plastic or other covering material.

As illustrated, the boot 506 has a pair of grooves 546a and 546b that extend circumferentially around the central opening, and the sensor assembly has a ring-shaped rib 550 that extends circumferentially around the outer end of it. Thus, the sensor assembly is inserted into the central opening of the boot 506 and pushed toward the center of the ball until the ring-shaped rib 550 of the sensor assembly engages in the lower (i.e., innermost) groove 546a in the boot, with the sensor assembly protruding from the open lower end of the boot 506.

A plug 552, which also has a circumferentially extending ring-shaped rib 554, is then inserted into the central opening of the boot 506, above the sensor package, and pressed forward until the ring-shaped rib 554 of the plug engages with the upper groove 546b in the boot. This secures the sensor assembly in position.

It will be appreciated that the foregoing description of preferred embodiments is for explanatory purposes only, and that various modifications to and departures from the disclosed embodiments will occur to those having skill in the art. The scope of protection of the invention is defined by the following claims.

## Claims

1. A sports ball, comprising:
an inflatable bladder (100); and
a sensor module attached to the inner surface of the wall of the bladder (100) and extending internally into the bladder (100), toward the center of the ball, with the sensor module comprising an elastomeric boot (506) with an open lower end and a sensor assembly disposed within a pocket (330) in the elastomeric boot;
wherein the sensor assembly includes a substrate; a rechargeable battery (220); and a wireless-resonant-charging coil (222) connected to an end of the substrate and arranged to recharge the rechargeable battery (220), with the wireless-resonant-charging coil (222) being located, within the boot, at a position that is spaced a distance from the wall of the bladder (100) in a direction toward the center of the ball; and
wherein the substrate, the rechargeable battery (220), and the wireless-resonant-charging coil (222) are overmolded and encased within a covering material;
wherein the elastomeric boot comprises a circular flange (508) at its upper end, the circular flange overlying the outer surface of the bladder (100) and bonding the upper end of the elastomeric boot to the outer surface of the bladder (100) to secure the upper end of the boot to the bladder
**characterised in that** the sensor assembly extends beyond the open lower end of the elastomeric boot (506), and **in that** the rechargeable battery (220) is secured to one side of the substrate.

2. The sports ball according to claim 1, wherein the wireless-resonant-charging coil (222) is oriented perpendicularly to thesubstrate.

3. The sports ball according to claim 2, wherein the wireless-resonant-charging coil (222) is located at an end of the substrate that is closer to the wall of the bladder (100) than the opposite end of the substrate is located and the wireless-resonant-charging coil (222) is generally parallel to the wall of the bladder (100) in the vicinity of the point of attachment of the sensor module to the bladder (100).

4. The sports ball according to claim 1, wherein the boot (506) conforms substantially to the shape of the sensor assembly.

5. The sports ball according to claim 4, wherein the boot (506) includes a longitudinally extending rib extending into the pocket (330) to secure the sensor assembly within the pocket (330) while maintaining a slight amount of unoccupied space within the boot.

6. The sports ball according to claim 1, further comprising an antenna (216) disposed on the substrate.

7. The sports ball according to claim 6, wherein the antenna (216) is located on a side of the substrate that is opposite to the side of the substrate on which the battery (220) is located.

8. The sports ball according to claim 6, wherein the antenna (216) is located at an end of the substrate that is opposite to the end of the substrate to which the wireless-resonant-charging coil (222) is attached.

9. The sports ball according to claim 6, wherein the antenna (216) is located at an end of the substrate that is closest to the center of the ball.

10. The sports ball according to claim 1, further comprising a radio transmitter connected to the substrate, the radio transmitter configured to transmit a unique identification code that is specific to the ball.

11. The sports ball according to claim 10, wherein the radio transmitter is a chip-based, ultra-wide-band radio transmitter.

12. The sports ball according to claim 1, further comprising a plug-shaped cap disposed within an end of the pocket (330) that is closest to the bladder (100).

13. The sports ball according to claim 12, wherein the cap includes a circumferential rib located approximately in the middle of the cap in the lengthwise direction and the pocket (330) includes a circumferential groove formed in a wall thereof and the circumferential rib fits within the circumferential groove to secure the cap, and therefore the sensor assembly, within the boot (506).

14. The sports ball according to claim 1, wherein the substrate comprises a printed circuit board.

15. The sports ball according to claim 1, wherein the boot (506) is longitudinally symmetrical.

## Patentansprüche

1. Sportball, umfassend:
eine aufblasbare Blase (100); und
ein Sensormodul, das an der Innenfläche der Wand der Blase (100) angebracht ist und sich in das Innere der Blase (100) zur Mitte des Balls hin erstreckt, wobei das Sensormodul eine elastomere Manschette (506) mit einem offenen unteren Ende und eine in einer Tasche (330) in der elastomeren Manschette angeordnete Sensoranordnung umfasst;
wobei die Sensoranordnung ein Substrat, eine wiederaufladbare Batterie (220) und eine drahtlos resonante Ladespule (222) umfasst, die mit einem Ende des Substrats verbunden und dazu angeordnet ist, die wiederaufladbare Batterie (220) aufzuladen, wobei die drahtlos resonante Ladespule (222) innerhalb der Manschette an einer Position angeordnet ist, die von der Wand der Blase (100) in einer Richtung zur Mitte des Balls beabstandet ist; und
wobei das Substrat, die wiederaufladbare Batterie (220) und die drahtlos resonante Ladespule (222) umspritzt und mit einem Abdeckmaterial umhüllt sind;
wobei die elastomere Manschette an ihrem oberen Ende einen kreisförmigen Flansch (508) aufweist, der über der Außenfläche der Blase (100) liegt und das obere Ende der elastomeren Manschette mit der Außenfläche der Blase (100) verbindet, um das obere Ende der Manschette an der Blase zu befestigen, **dadurch gekennzeichnet, dass** sich die Sensoranordnung über das offene untere Ende der elastomeren Manschette (506) hinaus erstreckt, und dass die wiederaufladbare Batterie (220) an einer Seite des Substrats befestigt ist.

2. Sportball gemäß Anspruch 1, wobei die drahtlos resonante Ladespule (222) rechtwinklig zum Substrat ausgerichtet ist.

3. Sportball gemäß Anspruch 2, wobei die drahtlos resonante Ladespule (222) an einem Ende des Substrats angeordnet ist, das näher an der Wand der Blase (100) als das gegenüberliegende Ende des Substrats liegt, und die drahtlos resonante Ladespule (222) im Allgemeinen parallel zur Wand der Blase (100) in der Nähe des Befestigungspunkts des Sensormoduls an der Blase (100) verläuft.

4. Sportball gemäß Anspruch 1, wobei die Manschette (506) im Wesentlichen der Form der Sensoranordnung entspricht.

5. Sportball gemäß Anspruch 4, wobei die Manschette (506) eine sich in Längsrichtung erstreckende Rippe aufweist, die sich in die Tasche (330) hinein erstreckt, um die Sensoranordnung in der Tasche (330) zu befestigen, während ein geringfügig freier Raum innerhalb der Manschette erhalten bleibt.

6. Sportball gemäß Anspruch 1, ferner umfassend eine auf dem Substrat angeordnete Antenne (216).

7. Sportball gemäß Anspruch 6, wobei sich die Antenne (216) auf einer Seite des Substrats befindet, die der Seite des Substrats, auf der sich die Batterie (220) befindet, gegenüberliegt.

8. Sportball gemäß Anspruch 6, wobei sich die Antenne (216) an einem Ende des Substrats befindet, das dem Ende des Substrats gegenüberliegt, an dem die drahtlos resonante Ladespule (222) angebracht ist.

9. Sportball gemäß Anspruch 6, wobei sich die Antenne (216) an einem Ende des Substrats befindet, das der Mitte des Balls am nächsten ist.

10. Sportball gemäß Anspruch 1, ferner umfassend einen Funksender, der mit dem Substrat verbunden ist, wobei der Funksender dazu ausgelegt ist, einen eindeutigen Identifikationscode zu senden, der für den Ball spezifisch ist.

11. Sportball gemäß Anspruch 10, wobei der Funksender ein chipbasierter Ultrabreitband-Funksender ist.

12. Sportball gemäß Anspruch 1, ferner umfassend eine stöpselförmigen Kappe, die in einem Ende der Tasche (330) angeordnet ist, das der Blase (100) am nächsten liegt.

13. Sportball gemäß Anspruch 12, wobei die Kappe eine Umfangsrippe aufweist, die sich ungefähr in der Mitte der Kappe in Längsrichtung befindet, und die Tasche (330) eine in einer Wand derselben ausgebildete Umfangsnut aufweist, und die Umfangsrippe in die Umfangsnut passt, um die Kappe und damit die Sensoranordnung in der Manschette (506) zu sichern.

14. Sportball gemäß Anspruch 1, wobei das Substrat eine gedruckte Leiterplatte umfasst.

15. Sportball gemäß Anspruch 1, wobei die Manschette (506) längssymmetrisch ist.

## Revendications

1. Ballon de sport, comprenant :
une vessie gonflable (100) ; et
un module capteur attaché à la surface intérieure de la paroi de la vessie (100) et s'étendant de façon interne dans la vessie (100), vers le centre du ballon, le module capteur comprenant un soufflet élastomérique (506) avec une extrémité inférieure ouverte et un ensemble capteur disposé à l'intérieur d'une poche (330) dans le soufflet élastomérique ;
dans lequel l'ensemble capteur inclut un substrat ; une batterie rechargeable (220) et une bobine de charge résonante sans fil (222) connectée à une extrémité du substrat et agencée pour recharger la batterie rechargeable (220), la bobine de charge résonante sans fil (222) étant située, à l'intérieur du soufflet, à une position qui est espacée, selon une distance, de la paroi de la vessie (100) dans une direction vers le centre du ballon ; et
dans lequel le substrat, la batterie rechargeable (220), et la bobine de charge résonante sans fil (222) sont surmoulés et enfermés à l'intérieur d'un matériau de couverture ;
dans lequel le soufflet élastomérique comprend une bride circulaire (508) à son extrémité supérieure, la bride circulaire recouvrant la surface extérieure de la vessie (100) et liant l'extrémité supérieure du soufflet élastomérique à la surface extérieure de la vessie (100) pour fixer l'extrémité supérieure du soufflet à la vessie
**caractérisé en ce que** l'ensemble capteur s'étend au-delà de l'extrémité inférieure ouverte du soufflet élastomérique (506), et **en ce que** la batterie rechargeable (220) est fixée à un côté du substrat.

2. Ballon de sport selon la revendication 1, dans lequel la bobine de charge résonante sans fil (222) est orientée perpendiculairement au substrat.

3. Ballon de sport selon la revendication 2, dans lequel la bobine de charge résonante sans fil (222) est située à une extrémité du substrat qui est plus près de la paroi de la vessie (100) que l'emplacement auquel est située l'extrémité opposée du substrat et la bobine de charge résonante sans fil (222) est généralement parallèle à la paroi de la vessie (100) dans le voisinage du point d'attache du module capteur à la vessie (100).

4. Ballon de sport selon la revendication 1, dans lequel le soufflet (506) épouse sensiblement la forme de l'ensemble capteur.

5. Ballon de sport selon la revendication 4, dans lequel le soufflet (506) inclut une nervure s'étendant longitudinalement s'étendant dans la poche (330) pour fixer l'ensemble capteur à l'intérieur de la poche (330) tout en maintenant une légère quantité d'espace inoccupé à l'intérieur du soufflet.

6. Ballon de sport selon la revendication 1, comprenant en outre une antenne (216) disposée sur le substrat.

7. Ballon de sport selon la revendication 6, dans lequel l'antenne (216) est situé sur un côté du substrat qui est opposé au côté du substrat sur lequel la batterie (220) est située.

8. Ballon de sport selon la revendication 6, dans lequel l'antenne (216) est située à une extrémité du substrat qui est opposée à l'extrémité du substrat à laquelle la bobine de charge résonante sans fil (222) est attachée.

9. Ballon de sport selon la revendication 6, dans lequel l'antenne (216) est située à une extrémité du substrat qui est la plus près du centre du ballon.

10. Ballon de sport selon la revendication 1, comprenant en outre un transmetteur radio connecté au substrat, le transmetteur radio étant configuré pour transmettre un code d'identification unique qui est spécifique au ballon.

11. Ballon de sport selon la revendication 10, dans lequel le transmetteur radio est un transmetteur radio à ultra-large bande, à base de puce.

12. Ballon de sport selon la revendication 1, comprenant en outre un capuchon en forme de bouchon disposé à l'intérieur d'une extrémité de la poche (330) qui est la plus près de la vessie (100).

13. Ballon de sport selon la revendication 12, dans lequel le capuchon inclut une nervure circonférentielle située approximativement au milieu du capuchon dans le sens de la longueur et la poche (330) inclut une rainure circonférentielle formée dans une paroi de celle-ci et la nervure circonférentielle s'ajuste à l'intérieur de la rainure circonférentielle pour fixer le capuchon, et donc l'ensemble capteur, à l'intérieur du soufflet (506) .

14. Ballon de sport selon la revendication 1, dans lequel le substrat comprend une carte de circuit imprimé.

15. Ballon de sport selon la revendication 1, dans lequel le soufflet (506) est longitudinalement symétrique.
